# EUROPEAN PATENT APPLICATION

(11) **EP 4 176 972 A1**
(43) Date of publication of application: **10.05.2023**
(21) Application number: 22200657.9
(22) Date of filing: 10.10.2022
(51) Int. Cl.: B01L 3/00, B01D 61/24, B01D 61/28

(54) **MULTIPLE WELL DEVICE AND METHOD OF USE**

(30) Priority: 04.11.2021 US 202117519112
(71) Applicant: Pall Corporation, Port Washington, NY 11050 (US)
(72) Inventor: SOFMAN, Marianna, Port Washington, NY 11050 (US); HARRIS, Steven A., Westborough, MA 01581 (US)
(74) Representative: Hoeger, Stellrecht & Partner Patentanwälte mbB

(57) **Abstract**

A multiple well device for processing fluid samples is provided, comprising a plate including a plurality of wells, each well including a first sub-well and a second sub-well, separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out.

## Description

### BACKGROUND OF THE INVENTION

Some assays, such as equilibrium dialysis, include analyzing the contents of two chambers (e.g., a sample chamber and a reference chamber) separated by a dialysis membrane, wherein smaller materials and/or molecules of interest pass can pass through the membrane, and larger material and/or molecules are prevented from passing through the membrane, and the contents of the two chambers are compared after equilibrium is reached.

There is a need for improved devices and methods suitable for use in analyzing the contents of two chambers separated by a dialysis membrane.

The present invention provides for ameliorating at least some of the disadvantages of the prior art. These and other advantages of the present invention will be apparent from the description as set forth below.

### BRIEF SUMMARY OF THE INVENTION

An aspect of the invention provides a multiple well device for processing fluid samples comprising a plate including a plurality of wells, each well including a first sub-well and a second sub-well, separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out.

In accordance with another aspect of the invention, a method for equilibrating fluid samples is provided, the method comprising placing fluid samples in a plurality of first sub-wells and second sub-wells in a multiple well device comprising a plate including a plurality of wells, each well including a first sub-well and a second sub-well, each first sub-well and second sub-well being separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out; and, allowing equilibrium between the plurality of first sub-wells and second sub-wells to be reached.

In accordance with another aspect of the invention, a method for analyzing fluid samples comprises placing fluid samples in a plurality of first sub-wells and second sub-wells in a multiple well device comprising a plate including a plurality of wells, each well including a first sub-well and a second sub-well, each first sub-well and second sub-well being separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out; allowing equilibrium between the plurality of first sub-wells and second sub-wells to be reached; and analyzing the fluid samples in each of the plurality of first sub-wells and second sub-wells.

### BRIEF DESCRIPTION OF THE SEVERAL VIEWS OF THE DRAWING(S)

Figure 1 is a drawing showing a top view of a multiple well device according to an aspect of the invention.
Figure 2A is a drawing showing an isometric view of the multiple well device shown in Figure 1; Figure 2B is a drawing showing a side cross-sectional view of the multiple well device shown in Figure 1 along line B-B; and Figure 2C is a drawing showing an isometric view of the device as generally shown in Figure 2A, without membranes, between the sub-wells.
Figure 3 is a drawing showing a tapered dialysis membrane arranged in a tapered cut out in a common wall between sub-wells in the multiple well device shown in Figure 1 in detail D.
Figure 4 is a drawing showing, diagrammatically, drawing samples for analysis from corresponding sub-wells in a multiple well according to an aspect of the invention.

### DETAILED DESCRIPTION OF THE INVENTION

In accordance with an aspect of the invention, a multiple well device for processing fluid samples is provided comprising a plate including a plurality of wells, each well including a first sub-well and a second sub-well, separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out.

In accordance with another aspect of the invention, a method for equilibrating fluid samples is provided, the method comprising placing fluid samples in a plurality of first sub-wells and second sub-wells in a multiple well device comprising a plate including a plurality of wells, each well including a first sub-well and a second sub-well, each first sub-well and second sub-well being separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out; and, allowing equilibrium between the plurality of first sub-wells and second sub-wells to be reached.

In accordance with another aspect of the invention, a method for analyzing fluid samples comprises placing fluid samples in a plurality of first sub-wells and second sub-wells in a multiple well device comprising a plate including a plurality of wells, each well including a first sub-well and a second sub-well, each first sub-well and second sub-well being separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out; allowing equilibrium between the plurality of first sub-wells and second sub-wells to be reached; and analyzing the fluid samples in each of the plurality of first sub-wells and second sub-wells.

In one aspect, the method for analyzing the fluid samples comprises detection of protein bond stretching and bending in the fluid samples.

Alternatively, or additionally, aspects of the method can include detection and quantification of aggregation in the fluid samples, including, for example, especially quantification of aggregation of protein therapeutics.

Advantageously, buffer conditions in corresponding sub-wells can be equilibrated without additional action, e.g., without having to remove samples from each sub-well to be equilibrated using external dialysis membranes and/or buffer exchanges.

Among other advantages, in some applications, for example, involving the detection of protein bond stretching and bending, as well as detection and quantification of aggregation (especially quantification of aggregation of protein therapeutics) the variability of buffer concentrations, preparations and/or conditions in the sample and reference chambers (sub-wells) is minimized, if not eliminated, reducing an adverse effect of the analysis and/or a "buffer mismatch error" signal from the analytical instrument. This is especially suitable for use with in-line automated devices and instruments, and for developing purer protein therapeutics.

Each of the components of the invention will now be described in more detail below, wherein like components have like reference numbers.

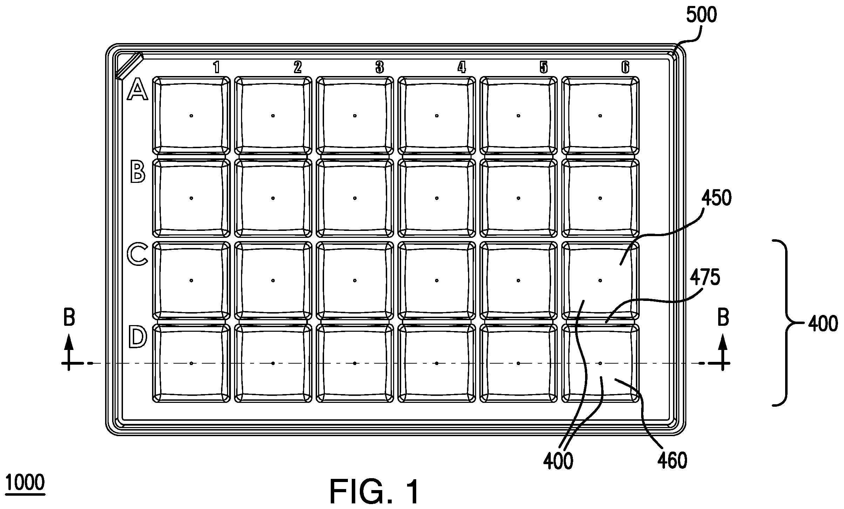

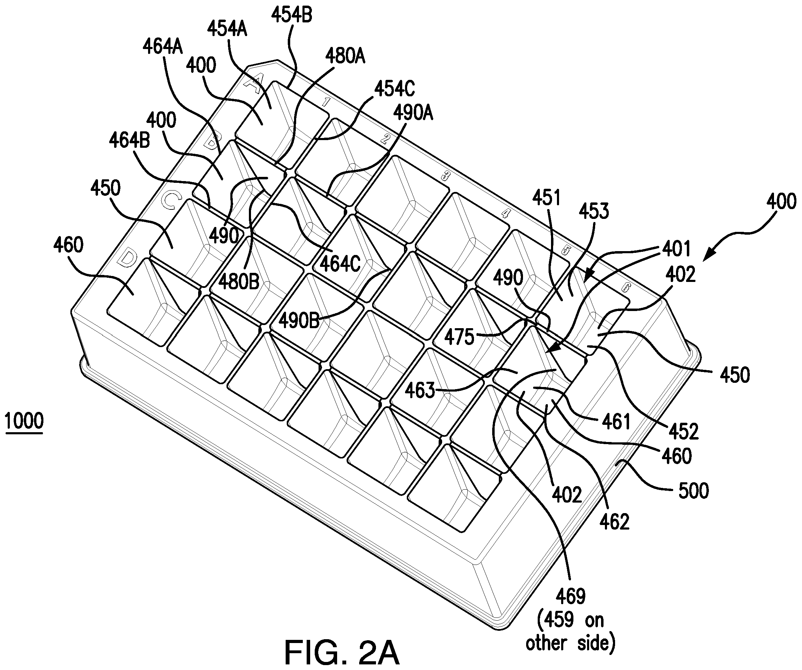

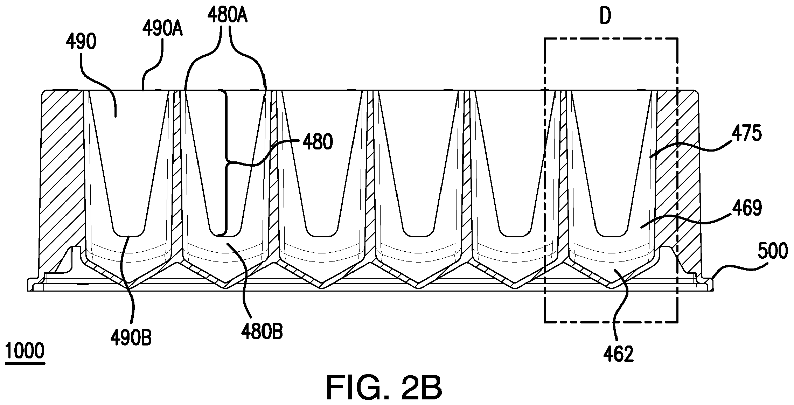

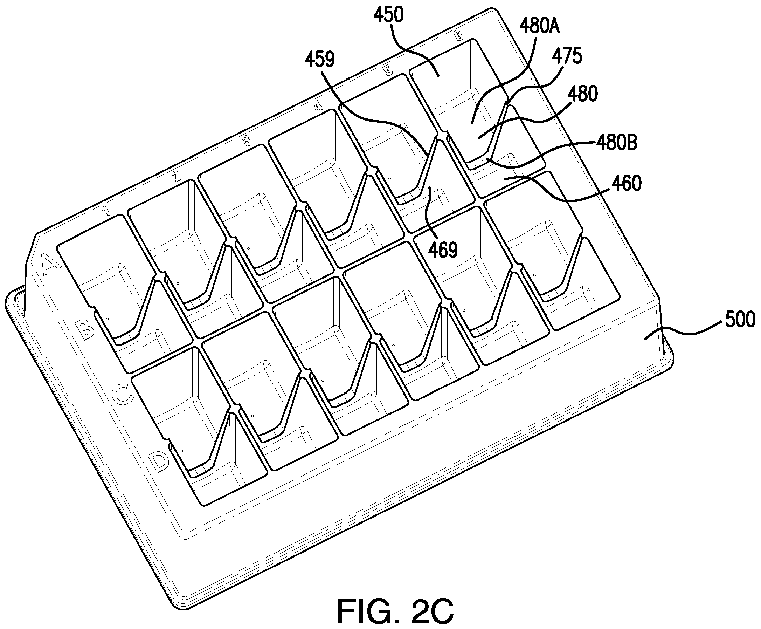

Figures 1, and 2A-2C show an aspect of the multiple well device 1000 comprising a plate 500 having a plurality of wells 400 (the wells being integrally formed), each well having an open top end 401 and a closed bottom end 402, wherein each well 400 includes a first sub-well 450 and a second sub-well 460. The sub-wells 450, 460, have respective open top ends 451, 461, closed bottom ends 452, 462, and chambers for receiving fluid 453, 463. Each sub-well has four side walls, respectively first side wall 454A, 464A; second side wall 454B, 464B; third side wall 454C, 464C, wherein fourth side wall 475 is a common side wall having a first wall face 459 (for the first sub-well 450, *see also,* Figure 2C) and a second wall face 469 (for the first sub-well 460), with a dialysis membrane 490 in the common side wall.

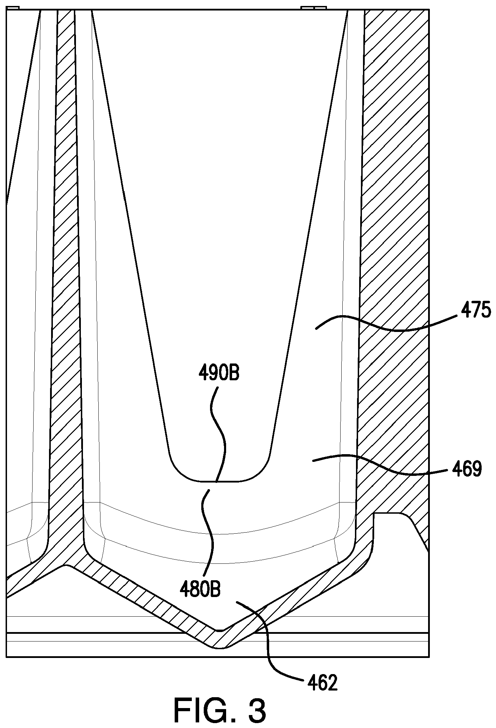

As shown in Figures 2A-2C, and in more detail in Figure 3, the common side wall 475 has a continuous tapered cut out 480 (wider at the upper end 480A, narrower at the lower end 480B) with a dialysis membrane 490 (not shown in Figure 2C) having a wider top end 490A and a narrower bottom end 490B, having a continuous taper from the top end to the bottom end, edges fluid-tightly sealed in the continuous tapered cut out 480.

As shown in Figure 3, the continuous tapered cut out 480 encompasses over 50% to less than 90% of the area of the common side wall. The area of the tapered cut-out (and corresponding area of the tapered membrane) is less than 90% of the common side wall.

Devices according to aspects of the invention can have any suitable number of wells, e.g., 6, 12, 24, or 96 wells, though aspects of the devices can have a fewer number or greater number of wells. Preferably, the devices will have dimensions (e.g., including standard architectures for the number of wells) suitable for use with, for example, plate readers, microscope holders, and automated analytical instruments.

The wells can have any suitable depth, for any suitable working volume of liquid, e.g., about 1 to about 7 mL for each sub-well, thought the volumes can be greater or lesser depending on the application and the number of wells. Suitable working volumes can be determined by one of skill in the art.

The device plate can be fabricated from any suitable rigid impervious material, including any impervious thermoplastic material, which is compatible with the fluid being processed. In a preferred aspect, the device plate is a polymer, such as an acrylic, polypropylene, polystyrene, or a polycarbonated resin.

The device plate can be fabricated by a variety of techniques, including, for example, injection molding.

A variety of membranes are suitable for use in aspects of the invention, and suitable membranes can be produced from a variety of polymers. Preferably, the membranes are made from polymers capable of thermally bonding with the material used to form the device plate, e.g., a polyethersulfone (PES) membrane can be thermally bound to a polypropylene or polystyrene plate. Suitable membranes include, for example, SUPOR^{®} PES membranes (Pall Corporation, Port Washington, NY).

The membranes can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or a removal rating, as long as the pore structure allows the passage therethrough of buffer, media, salts, small molecules and growth factors, but prevents the passage therethrough of larger biologics such as antibodies For example, for applications involving buffer and media exchange, a pore size in the range of 75 to 165 kDa is suitable, preferably, about 100 kDa or about 150 kDa.

The membrane can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869.

The surface characteristics of the membrane can be modified (e.g., to affect the CWST, to include a surface charge, e.g., a positive or negative charge, and/or to alter the polarity or hydrophilicity of the surface).

In an aspect, dialysis membranes according to embodiments of the invention are monolithic, preferably manufactured via additive manufacturing (sometimes referred to as "additive layer manufacturing" or "3D printing"), and can be printed within the device walls. They are typically formed by repeated depositions of a metal powder bound together with an activatable binder (e.g., binder jetting, sometimes referred to as "drop on powder"), typically followed by agglomerating the powder, e.g., by sintering. If desired, during manufacturing, beads of a desired size can be included in the membrane polymer material, and subsequently etched out to provide the pores in the membrane.

In an aspect, the device plate is fabricated separately, with the cutouts, e.g., by injection molding, and the membrane is subsequently manufactured in the cut out via additive manufacturing. If desired, the device plate is heated to improve the seal of the membrane to the plate as the membrane is printed.

In one aspect of additive manufacturing, the membrane material (e.g., PES, nylon, or polypropylene, or nylon), including monodisperse silica beads (of the desired diameter to provide the pore size), and a solvent (e.g, an organic solvent such as N-Methylpyrrolidone (NMP)) is extruded through the nozzle of a pump, and heated. After printing, the silica beads are etched away (e.g., using potassium hydroxide).

In another aspect, the device plate and membrane can both be printed by additive manufacturing, e.g., using two extruders, one containing the resin for the device plate (e.g., polypropylene), without silica beads, and the other containing the resin with the beads, followed by etching the beads away.

Any suitable additive manufacturing equipment can be used, and a variety of production 3D printers are suitable and commercially available.

The amount of time for equilibrium to be reached between the fluid samples in the corresponding sub-wells can be in the range of, for example, about two minutes to about two hours, wherein equilibrium is reached more quickly when the dialysis membranes have larger pore sizes, than when dialysis membranes have smaller pore sizes. The amount of time can be readily determined by one of skill in the art.

The following example further illustrates the invention but, of course, should not be construed as in any way limiting its scope.

### EXAMPLE

This example demonstrates using an aspect of the multiple well device usable as an in-line device with an instrument for measuring and quantifying aggregation of protein therapeutics, using microfluidic modulation mid-infrared spectroscopy to detect protein bond stretching and bending, thus revealing secondary protein structure information and potential aggregation.

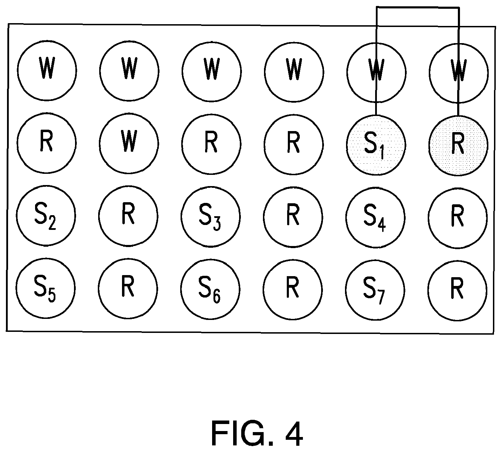

A multiple well device as generally shown in Figure 1 can be used for a test. Each dialysis membrane has a pore size of 10 nm. Using Figure 4 for reference, the samples (S) and references (R) (e.g., S₁ and R, S₂ and R, etc.) can be loaded into corresponding sub-wells containing buffers and the respective pairs can be evaluated by the instrument.

Since the fluids in the corresponding sub-wells will have equilibrated within a few minutes the instrument will not signal a "buffer mismatch error" that could adversely impact the protein structure analysis.

The instrument can identify aggregated monoclonal antibody samples in 5 distinctly different concentrations.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred aspects of this invention are described herein, including the best mode known to the inventors for carrying out the invention. Variations of those preferred aspects may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A multiple well device for processing fluid samples comprising:
a plate including a plurality of wells, each well including a first sub-well and a second sub-well, separated by an individual dialysis membrane;
each individual dialysis membrane having a top end and a bottom end, having a continuous taper from the top end to the bottom end,
each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out.

2. The multiple well device of claim 1, wherein the individual dialysis membranes each have a pore size in the range of 75 kDa to 165 kDa.

3. The multiple well device of claim 1 or 2, wherein the individual dialysis membranes are each polyethersulfone or polysulfone membranes.

4. A method for equilibrating fluid samples, the method comprising placing fluid samples in a plurality of first sub-wells and second sub-wells in a multiple well device comprising a plate including a plurality of wells, each well including a first sub-well and a second sub-well, each first sub-well and second sub-well being separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out; and, allowing equilibrium between the plurality of first sub-wells and second sub-wells to be reached.

5. A method for analyzing fluid samples, the method comprising placing fluid samples in a plurality of first sub-wells and second sub-wells in a multiple well device comprising a plate including a plurality of wells, each well including a first sub-well and a second sub-well, each first sub-well and second sub-well being separated by an individual dialysis membrane; each individual dialysis membrane having a top end and a bottom end, having a continuous taper from the top end to the bottom end, each first sub-well and each second sub-well having an upper end and a lower end, and side walls, wherein one side wall is a common side wall shared by the first sub-well and the second sub-well, the common side wall having a continuous tapered cut-out with the individual dialysis membrane fluid-tightly sealed in the continuous tapered cut-out;
allowing equilibrium between the plurality of first sub-wells and second sub-wells to be reached; and,
analyzing the fluid samples in each of the plurality of first sub-wells and second sub-wells.
